# EUROPÄISCHE PATENTANMELDUNG

(11) **EP 4 032 397 A1**
(43) Veröffentlichungstag der Anmeldung: **27.07.2022**
(21) Anmeldenummer: 21153244.5
(22) Anmeldetag: 25.01.2021
(51) Int. Cl.: A01G 17/08

(54) **LAUBHEFTER**

(71) Anmelder: Clemens GmbH & Co. KG, Weinbautechnik - Getränketechnik, 54516 Wittlich (DE)
(72) Erfinder: Clemens, Patrick, 54484 Maring Noviand (DE)
(74) Vertreter: Tarvenkorn, Oliver

(57) **Zusammenfassung**

Laubhefter zum Bearbeiten von Baum- und/oder Reihenkulturen mit einer Laubwand, insbesondere zum Aufrichten und Binden von Trieben der Baum- und/oder Reihenkultur, durch Einbringen von mindestens zwei Schnurelementen auf verschiedenen Seiten der Laubwand mittels des Laubhefters, wobei die Triebe durch die Schnurelemente positionierbar sind, wobei der Laubhefter ein Aufrichtsystem zum Aufrichten der Triebe umfasst, und wobei der Laubhefter eine Verbindungsvorrichtung umfasst, welche dazu vorgesehen und ausgebildet ist, einen Verbindungsvorgang zum Verbinden der Schnurelemente mittels Verbindungselemente durchzuführen, wobei der Laubhefter mit der Verbindungsvorrichtung dazu vorgesehen und ausgebildet ist, den Verbindungsvorgang automatisch durchzuführen.

## Beschreibung

Die vorliegende Anmeldung betrifft einen Laubhefter zum Bearbeiten von Baum- und/oder Reihenkulturen mit einer Laubwand, insbesondere zum Aufrichten und Binden von Trieben der Baum- und/oder Reihenkultur, durch Einbringen von mindestens zwei Schnurelementen auf verschiedenen Seiten der Laubwand mittels des Laubhefters, wobei die Triebe durch die Schnurelemente positionierbar sind, wobei der Laubhefter ein Aufrichtsystem zum Aufrichten der Triebe umfasst und wobei der Laubhefter eine Verbindungsvorrichtung umfasst, welche dazu vorgesehen und ausgebildet ist, einen Verbindungsvorgang zum Verbinden der Schnurelemente, beispielsweise mittels Verbindungselemente, durchzuführen.

Derartige Laubhefter sind aus dem Stand der Technik von den einschlägigen Herstellern hinlänglich bekannt.

Grundsätzlich ist ein Laubhefter dafür vorgesehen, Elemente der Baum- und/oder Reihenkultur, beispielsweise einen Rebstock bei einer Weinbaukultur, zu ordnen durch Aufrichten und Fixieren der Triebe.

Rebstöcke bilden Triebe mit Laub, wobei auch Weintrauben an diesen Trieben wachsen. Die Triebe haben eine gewisse Neigung beim Wachstum in die seitliche Richtung aufgrund ihres Eigengewichts, also quer zu der Richtung der Baum- und/oder Reihenkultur, wodurch sich die Weintrauben dann unterhalb der Laubblätter befinden könnten und verschattet werden, was eine Verzögerung im Reifeprozess der Weintrauben hervorrufen kann. Die aufzurichtenden Triebe tragen jedoch noch keine Trauben.

Um diese Verzögerung zu minimieren, wird mittels des beschriebenen Laubhefters die Triebe und entsprechend auch das Laub aufgerichtet und positioniert beziehungsweise fixiert, durch ein Einbringen von Schnurelementen. Dabei sollten die Schnurelemente in Abständen miteinander verbunden werden, um die aufgerichteten Triebe gut zu positionieren. Eine Verbindung der Schnurelemente wird durch eine Verbindungsvorrichtung durch ein Einbringen eines Verbindungselements erreicht.

Dabei sollte beim Verbinden, also dem Klammern der Schnurelemente, darauf geachtet werden, dass kein Verbindungsvorgang an bestimmten Stellen erfolgt, wie auf Höhe eines Stickels oder bei einer dichten Belaubung, so dass der Laubhefter und die Rebstöcke nicht beschädigt werden.

Weiter ist aus dem Stand der Technik bekannt, dass der Verbindungsvorgang zum Verbinden der Schnurelemente manuell von dem Fahrer ausgelöst wird. Dadurch, dass der Fahrer sich auf das Fahren an sich, also die Geschwindigkeit des Fahrzeugs, der Position des Fahrzeugs, und durch die richtige Höheneinstellung des Laubhefters schon sehr beschäftigt ist, kann die Reaktionszeit des Fahrers beim Auslösen des Verbindungsvorgangs weiter beeinträchtigt sein, was dazu führen kann, dass ein Verbindungsvorgang ausgelöst wird, wenn es eben nicht erwünscht ist. Dies kann zu Beschädigungen an dem Laubhefter und/oder der Baum- und/oder Reihenkultur führen.

Es ist daher die Aufgabe der vorliegenden Erfindung, einen Laubhefter derart bereitzustellen, dass der Verbindungsvorgang automatisch ausgeführt wird an einer geeigneten Stelle der Baum- und/oder Reihenkultur. Weiter ist es Aufgabe der vorliegenden Erfindung, ein Verfahren zum Durchführen des automatischen Verbindungsvorgangs bereitzustellen.

Gelöst werden die zugrunde liegenden Aufgaben durch einen Laubhefter mit den Merkmalen des Anspruches 1 und durch ein Verfahren mit den Merkmalen des nebengeordneten Anspruches 8.

Kerngedanke der vorliegenden Erfindung ist es, einen Laubhefter zum Bearbeiten von Baum- und/oder Reihenkulturen mit einer Laubwand bereitzustellen, insbesondere zum Aufrichten und Binden von Trieben der Baum- und/oder Reihenkultur, durch Einbringen und/oder Führen von mindestens zwei Schnurelementen auf verschiedenen Seiten der Laubwand mittels des Laubhefters, wobei die Triebe durch die Schnurelemente positionierbar sind, wobei der Laubhefter ein Aufrichtsystem zum Aufrichten der Triebe umfasst und wobei der Laubhefter eine Verbindungsvorrichtung umfasst, welche dazu vorgesehen und ausgebildet ist, einen Verbindungsvorgang zum Verbinden der Schnurelemente, insbesondere mittels Verbindungselemente, durchzuführen, wobei der Laubhefter mit der Verbindungsvorrichtung dazu vorgesehen und ausgebildet ist, den Verbindungsvorgang automatisch durchzuführen.

Dabei kann ein Verbindungsvorgang ein Klammervorgang sein, das heißt, dass die Verbindung mittels Klammerelementen durchgeführt ist. Derartige Klammern beziehungsweise Klammerelemente sind aus dem Stand der Technik hinreichend bekannt.

Es ist zu beachten, dass der Laubhefter nach einem Drahthefter und einem Einzugshefter zu unterscheiden sind. Hinsichtlich des Einzugshefters wird als Schnurelement ein tatsächliches Stück Schnur, beispielsweise aus Garn aus verschiedenen Materialien, verwendet. Hinsichtlich des Drahthefters ist das Schnurelement ein in der Baum- und/oder Reihenkultur beweglich installierter Draht, welche von dem Drahthefter verbunden werden.

Erfindungsgemäß ist es vorgesehen, dass der Verbindungsvorgang zum Verbinden der Schnurelemente automatisch durchgeführt wird, das heißt, dass der Verbindungsvorgang ausgelöst wird ohne Zutun des Fahrers, etwa durch eine manuelle Betätigung eines Auslöseknopfs. Der Verbindungsvorgang ist also unabhängig vom Fahrer durchführbar. Der Laubhefter ist bevorzugt also derart ausgebildet, dass der Laubhefter bei einem geeigneten Zeitpunkt und/oder Ort einen Verbindungsvorgang automatisch auslöst. Denkbar ist auch, dass der Verbindungsvorgang sowohl automatisch als auch manuell ausgelöst werden kann, das heißt, dass der Verbindungsvorgang einerseits unabhängig vom Fahrer ausgelöst werden kann und andererseits, etwa wie im Stand der Technik beschrieben, manuell durch den Fahrer ausgelöst werden kann, sollte sich dies als dienlich erweisen.

Durch das automatische Auslösen beziehungsweise Durchführen des Verbindungsvorgangs muss ein Fahrer nicht mehr manuell den Verbindungsvorgang auslösen, so dass der Fahrer sich auf die Fahrbewegung und die korrekte Höheneinstellung des Laubhefters konzentrieren kann. Weiter werden die inkorrekten Klammerungen vermieden, wodurch die Standzeit, welche bedingt ist durch fehlerhafte Klammerungen, reduziert werden kann, so dass insgesamt eine Erhöhung der Arbeitsleistung möglich ist.

Gemäß einer bevorzugten Ausführungsform ist es vorgesehen, dass der Verbindungsvorgang in regelmäßigen oder unregelmäßigen Abständen auslösbar beziehungsweise durchführbar ist. Dies ist abhängig von der Beschaffenheit der Laubwand. Ist die Laubwand nicht besonders dicht, beispielsweise zu Beginn der Vegetationsperiode, kann der Verbindungsvorgang in einem vorgebbaren Abstand ausgelöst werden, beispielsweise alle 10 Meter, vorzugsweise mit einem Toleranzbereich von +2 Meter / -2 Meter.

Ist die Laubwand bereits sehr dicht, ist es vorgesehen, den Verbindungsvorgang gezielt auszulösen, in einem Bereich mit möglichst geringer Laubdichte beziehungsweise in einer Lücke der Laubwand. Denkbar sind auch weitere Bedingungen, beispielsweise ein weiter verkürzter Abstand, welcher kleiner als 10 Meter ist, oder Auslösen des Verbindungsvorgangs nach jedem Stickel oder dergleichen.

Gemäß einer besonders bevorzugten Ausführungsform ist es vorgesehen, dass eine Erkennungseinrichtung vorgesehen ist, wobei die Erkennungseinrichtung dazu vorgesehen und ausgebildet ist, eine Lücke in der Laubwand der Baum- und/oder Reihenkultur zu erkennen, wobei der Laubhefter eine Steuereinheit umfasst, welche dazu vorgesehen und ausgebildet ist, bei einer Erkennung der Lücke die Verbindungsvorrichtung derart zu betätigen, dass ein Verbindungsvorgang auf Höhe der Lücke ausgelöst wird. Die Erkennungseinrichtung kann dabei an dem Laubhefter oder an einem Fahrzeug, an welchem den Laubhefter angeordnet und mit welchem der Laubhefter verbunden ist, angeordnet sein.

Der Begriff der Lücke kann dabei abhängig von der Beschaffenheit der Laubwanddichte definiert werden. Eine Lücke kann beispielsweise definiert sein, dass kein Hindernis, wie etwa Laub, ein Stickel oder dergleichen, in einem Erfassungsbereich der Erkennungseinrichtung erkannt wurde. Unter einer Lücke kann auch verstanden werden, dass möglichst wenig Laub in dem Erfassungsbereich vorhanden ist; dies ist besonders bei einer hohen Laubdichte sinnvoll.

Eine Lücke kann dabei eine begrenzte Ausdehnung aufweisen. Bevorzugt ist eine Lücke in einem Bereich von 5 cm bis 40 cm, bevorzugter von 10 cm bis 30 cm und besonders bevorzugt von 10 cm bis 20 cm. Die Abmessungen betreffen die Ausdehnung in Höhenrichtung und/oder Längsrichtung gesehen. Es ist denkbar, dass auch andere Bereiche vorgesehen sein können, falls dies der jeweilige Einsatzbereich erfordert. Es ist unerheblich, wie tief die Lücke ist, da eine Lücke nur dann erkannt ist, wenn kein Hindernis vorliegt. Denkbar ist, dass die Abmessung in Höhenrichtung sich von der Abmessung in Längsrichtung unterscheidet und entsprechend einen anderen Wertebereich aufweist. Denkbar ist alternativ, dass die Abmessung in Höhenrichtung der Abmessung in Längsrichtung entspricht und entsprechend den gleichen Wertebereich aufweist.

Gemäß einer bevorzugten Ausführungsform ist die Erkennungseinrichtung dazu vorgesehen und ausgebildet, Hindernisse zu erkennen, um einen Verbindungsvorgang auf Höhe der Hindernisse zu verhindern. Das heißt, dass im optimalen Fall die Erkennungseinrichtung gleichzeitig eine Lücke und ein Hindernis erkennen kann.

Gemäß einer besonders bevorzugten Ausführungsform ist es vorgesehen, dass die Erkennungseinrichtung einen Sensor aufweist, welcher zum Erkennen der Lücke ausgebildet und vorgesehen ist. Weiter bevorzugt ist der Sensor zum Erkennen der Lücke oder zum Erkennen der Lücke und des Hindernisses ausgebildet und vorgesehen. Ebenso bevorzugt kann es denkbar sein, dass Hindernisse, welche in ihrer Position fest in der Kultur verbaut sind, vermessen sind, so dass ihre Koordinaten bekannt sind. Beispielsweise können derartige Hindernisse Stickel, weitere Begrenzungen oder dergleichen sein. Die Positionen der Hindernisse können in einer Datenbank hinterlegt sein, wobei die Erkennungseinrichtung auf diese Datenbank zugreifen kann und entsprechend keinen Verbindungsvorgang auslöst, wenn ein derartiges Hindernis in einem Bereich des Laubhefters ist. Dieser Bereich kann toleranzbehaftet sein. Die Positionen dieser Hindernisse können beispielsweise mittels GPS, DGPS, RTK-Vermessung, durch Eingabe von Referenzpunkten, mittels geometrischer Daten durch den Fahrer oder dergleichen festgelegt sein.

Gemäß einer bevorzugten Ausführungsform ist es vorgesehen, dass der Sensor ausgewählt ist aus der Gruppe umfassend einen Ultraschallsensor, einen Radarsensor, ein Kamerasystem, einen Reflexlichtschalter, einen ToF-Sensor oder jegliche Kombination davon. Diese Sensoren sind für eine Distanzmessung geeignet, wobei jeder weitere Sensor, welcher für die Distanzmessung eingesetzt werden kann, denkbar ist. Durch eben eine Distanzmessung kann erkannt werden, ob sich in dem jeweiligen Erfassungsbereich der Erkennungseinrichtung beziehungsweise des Sensors ein Objekt befindet oder nicht, beziehungsweise wie dicht die Objekte im Erfassungsbereich vorhanden sind.

Besonders bevorzugt handelt es sich bei dem Sensor um ein Kamerasystem. Hierzu ist bevorzugt weiter eine Auswerteinheit vorgesehen, zum Auswerten der Daten des Kamerasystems. Weiter bevorzugt ist der Erfassungsbereich des Sensors quer zu der Baum- und/oder Reihenkultur verlaufend, also im Wesentlichen in einem 90°-Winkel dazu, wobei auch denkbar ist, dass der Erfassungsbereich in einem anderen Winkel zu der Kultur verlaufend angeordnet ist, beispielsweise derart, dass eine Voreilung des Sensorsignals möglich ist. Alternativ bevorzugt handelt es sich bei dem Sensor um einen Ultraschallsensor. Hindernisse bzw. Lücken werden mittels des Ultraschallsensors zuverlässig erkannt.

Es ist grundsätzlich denkbar, dass der Sensor in seiner Funktionsweise durch die nächstgelegene Reihe der Baum- und/oder Reihenkultur gestört wird oder nicht ausreichende Kriterien zur Erkennung einer Lücke vorliegen. Gemäß einer bevorzugten Ausführungsform kann es daher vorgesehen sein, dass die Erkennungseinrichtung ein blickdichtes Element umfasst, wobei der Sensor auf einer ersten Seite der Laubwand angeordnet ist und das blickdichte Element auf einer zweiten Seite der Laubwand dem Sensor gegenüberliegend angeordnet ist.

Durch das blickdichte Element ist es daher möglich, die störende nächstgelegene Reihe der Baum- und/oder Reihenkultur für den Sensor auszublenden. Ebenso kann das blickdichte Element als Referenz für den Sensor dienen.

Das blickdichte Element kann dabei ein flächiges Element sein, das heißt, dass die Erstreckung in zwei Dimensionen deutlich größer sind als in der dritten Dimension. Bevorzugt sind die Breite und Länge, größer als die Höhe des flächigen Elements.

Gemäß einer weiteren besonders bevorzugten Ausführungsform kann es vorgesehen sein, dass die Erkennungseinrichtung, insbesondere der Sensor, der Verbindungsvorrichtung in Bewegungsrichtung des Laubhefters gesehen vorauseilend angeordnet ist.

Vorauseilend ist demnach derart zu verstehen, dass die Erkennungseinrichtung in einem ersten Abstand in Bewegungsrichtung vor der Verbindungsvorrichtung angeordnet ist, oder aufgrund der Anstellung der Erkennungseinrichtung, also in einem Winkel dazu, der Verbindungsvorrichtung vorauseilend ist. Ein Vorauseilen ist dahingehend vorteilhaft, dass nicht beim Moment des Erkennens einer geeigneten Stelle zum Auslösen des Verbindungsvorgangs der Verbindungsvorgang ausgelöst werden muss. Durch Verzögerungen im System kann dies so nicht gewährleistet werden. Bei einem Vorauseilen hingegen kann das System entsprechend zeitlich reagieren und den Verbindungsvorgang präzise auslösen.

Ein weiterer Kerngedanke der Erfindung ist es, ein Verfahren zum Durchführen eines automatischen Verbindungsvorgangs eines Laubhefters zum Bearbeiten von Baum- und/oder Reihenkulturen mit einer Laubwand anzugeben, insbesondere zum Aufrichten und Binden von Trieben der Baum- und/oder Reihenkultur, wobei der Laubhefter ein Aufrichtsystem zum Aufrichten der Triebe und eine Verbindungsvorrichtung umfasst, wobei das Verfahren die Schritte umfasst:
a. Befahren der Baum- und/oder Reihenkultur und Einbringen und/oder Führen von mindestens zwei Schnurelementen in die Baum- und/oder Reihenkultur auf verschiedenen Seiten der Laubwand mittels des Laubhefters, um die Triebe zu positionieren;
b. Erkennen einer Lücke in der Laubwand der Baum- und/oder Reihenkultur mittels einer Erkennungseinrichtung des Laubhefters;
c. automatische Betätigung der Verbindungsvorrichtung zum Ausführen eines Verbindungsvorgangs zum Verbinden der Schnurelemente mittels Verbindungselemente bei einer Erkennung der Lücke derart, dass ein Verbindungsvorgang auf Höhe der Lücke ausgeführt wird.

Die vorliegende Anmeldung offenbart auch jegliche Kombination der in ihr enthaltenen Merkmale. Die Merkmale werden auch untereinander austauschbar angesehen. Alle gegenständlichen Merkmale sind in korrespondierender Weise auch als Verfahrensmerkmale denkbar.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1: perspektivische Ansicht eines Laubhefters aus dem Stand der Technik;
- Fig. 2: Rückansicht des Laubhefters nach Fig. 1;
- Fig. 3: Laubhefter gemäß einer bevorzugten Ausführungsform.

In den Figuren werden gleiche Bauelemente mit den gleichen Bezugszeichen bezeichnet, wobei in manchen Figuren die Bezugszeichen zur besseren Übersichtlichkeit weggelassen werden können.

Ein Laubhefter 1 ist in seinen Grundzügen bereits hinlänglich bekannt, so dass auf eine ausführliche Beschreibung verzichtet werden kann. Die neuen und erfindungswesentlichen Merkmale werden in den Figuren genauer dargestellt und entsprechend beschrieben, in Kombination mit bereits bekannten Merkmalen.

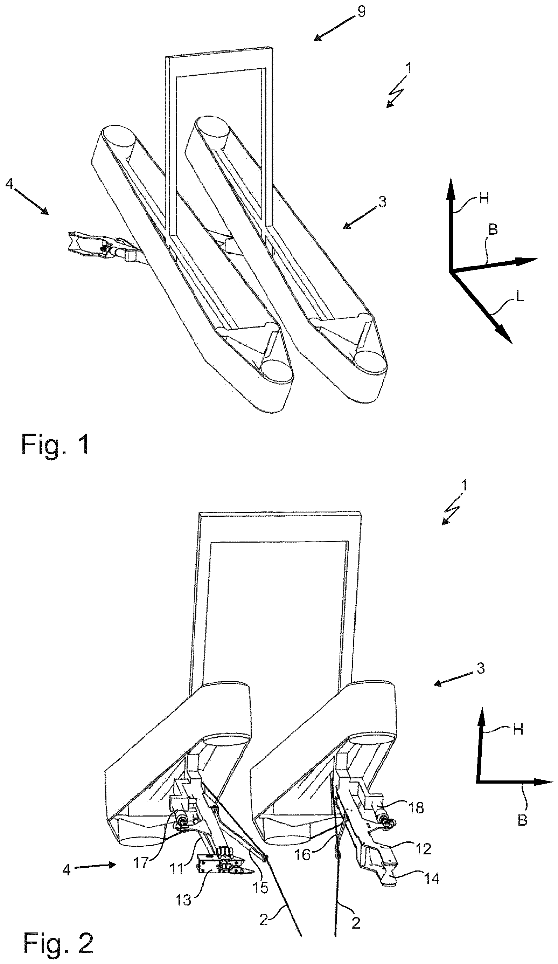

In der Figur 1 ist ein Laubhefter 1 in einer perspektivischen Ansicht und in der Figur 2 in einer Rückansicht dargestellt, wobei der Laubhefter 1 ein Aufrichtsystem 3 zum Aufrichten von Trieben der Baum- und/oder Reihenkultur und eine Verbindungsvorrichtung 4, welche dazu vorgesehen und ausgebildet ist, einen Verbindungsvorgang zum Verbinden von Schnurelementen 2 mittels Verbindungselemente durchzuführen. Die Schnurelemente 2 sind beispielsweise der Figur 2 zu entnehmen.

Weiter weist der Laubhefter 1 ein Anbringelement 9 auf, mittels welchem der Laubhefter an einem Hubmasten 10 eines Fahrzeugs 19 angeordnet werden kann.

In der Figur 2 ist die Verbindungsvorrichtung 4 detaillierter dargestellt. Dabei umfasst die Verbindungsvorrichtung 4 einen ersten Verbindungsarm 11 mit einer ersten Schnurelementführung 15 und einem Verbindungsautomat 13, einen zweiten Hebelarm 12 mit einer zweiten Schnurelementführung 16 und einem Gegenstück 14 zu dem Verbindungsautomat 13, wobei das Gegenstück 14 derart geformt ist, ein Verbindungselement entsprechend derart einzubringen, dass die Schnurelemente 2 miteinander verbunden werden können. Der Verbindungsautomat 13 hingegen beinhaltet die Verbindungselemente und ist dazu ausgebildet, die Verbindungselemente auszuwerfen, um in Kombination mit dem Gegenstück 14 die Schnurelemente 2 zu verbinden.

Die Verbindungsarme 11, 12 sind in Breitenrichtung B bewegbar, und zwar drehbar um eine jeweilige Drehachse, so dass die Verbindungsarme 11, 12 drehbar an dem Aufrichtsystem angeordnet sind. Eine Bewegung der Verbindungsarme 11, 12 wird mittels eines ersten Stellglieds 17 und eines zweiten Stellglieds 18 erreicht, wobei die Stellglieder 17, 18 einerseits drehbar mit dem Aufrichtsystem 3 und andererseits drehbar mit dem jeweiligen Verbindungsarm 11, 12 verbunden sind. Bei einer Betätigung des jeweiligen Stellglieds 17, 18 wird dessen Länge verändert, wobei Länge der Abstand zwischen seinen beiden Drehpunkten sein kann, so dass der jeweilige Verbindungsarm 11, 12 um die jeweilige Drehachse gedreht wird.

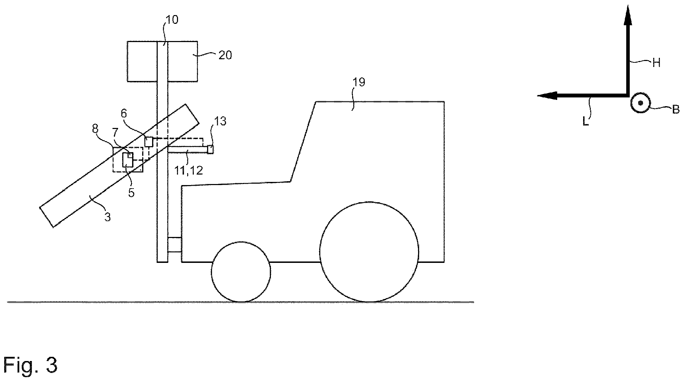

In der Figur 3 ist der Laubhefter 1 nochmals in einer schematischen Darstellung dargestellt.

So sind in der Figur 3 die Erkennungseinrichtung 5 mit einem Sensor 7 und die Steuereinheit 6 dargestellt, wobei bevorzugt die Erkennungseinrichtung 5 in Längsrichtung L gesehen vor der Verbindungsvorrichtung 4, besonders bevorzugt vor dem Verbindungsautomat 13 angeordnet ist.

Weiter steht die Steuereinheit 6 mit der Erkennungseinrichtung 5 zumindest in signaltechnischer Verbindung, wobei die Daten des Sensor 7 an die Steuereinheit 6 übermittelt werden können. Die erhaltenen Daten des Sensors 7 werden dann in der Steuereinheit 6 weiter derart verarbeitet, dass eine Auslösung des Verbindungsvorgangs initiiert wird, wenn eine entsprechende Lücke erkannt worden ist. Zur Ansteuerung beziehungsweise zur Auslösung des Verbindungsvorgangs steht die Steuereinheit 6 zumindest signaltechnisch in Verbindung mit dem ersten Stellglied 17 und dem zweiten Stellglied 18, um eine Längenänderung der Stellglieder 17, 18 hervorzurufen. Natürlich sind auch noch andere Stellglieder denkbar, mit entsprechender anderer oder gleicher Wirkungsweise.

Weiter bevorzugt kann ein Behälter 20 vorgesehen sein, welcher einen Vorrat an Schnurelementen 2 beinhaltet.

Allgemein kann die Längsrichtung L als die Bewegungsrichtung des Fahrzeugs 19 verstanden werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Laubhefter
- 2: Schnurelement
- 3: Aufrichtsystem
- 4: Verbindungsvorrichtung
- 5: Erkennungseinrichtung
- 6: Steuereinheit
- 7: Sensor
- 8: blickdichtes Element
- 9: Anbringelement
- 10: Hubmast
- 11: erster Verbindungsarm
- 12: zweiter Verbindungsarm
- 13: Verbindungsautomat
- 14: Gegenstück
- 15: erste Schnurelementführung
- 16: zweite Schnurelementführung
- 17: erstes Stellglied
- 18: zweites Stellglied
- 19: Fahrzeug
- 20: Behälter
- H: Höhenrichtung
- B: Breitenrichtung
- L: Längsrichtung

## Patentansprüche

1. Laubhefter (1) zum Bearbeiten von Baum- und/oder Reihenkulturen mit einer Laubwand, insbesondere zum Aufrichten und Binden von Trieben der Baum- und/oder Reihenkultur, durch Einbringen und/oder Führen von mindestens zwei Schnurelementen (2) auf verschiedenen Seiten der Laubwand mittels des Laubhefters (1), wobei die Triebe durch die Schnurelemente (2) positionierbar sind, wobei der Laubhefter (1) ein Aufrichtsystem (3) zum Aufrichten der Triebe umfasst, und wobei der Laubhefter (1) eine Verbindungsvorrichtung (4) umfasst, welche dazu vorgesehen und ausgebildet ist, einen Verbindungsvorgang zum Verbinden der Schnurelemente (2), bevorzugt mittels Verbindungselemente, durchzuführen,
**dadurch gekennzeichnet, dass**
der Laubhefter (1) mit der Verbindungsvorrichtung (4) dazu vorgesehen und ausgebildet ist, den Verbindungsvorgang automatisch durchzuführen.

2. Laubhefter (1) nach Anspruch 1,
**dadurch gekennzeichnet, dass**
der Verbindungsvorgang in regelmäßigen oder unregelmäßigen Abständen durchführbar ist.

3. Laubhefter (1) nach Anspruch 1 oder Anspruch 2,
**dadurch gekennzeichnet, dass**
eine Erkennungseinrichtung (5) vorgesehen ist, wobei die Erkennungseinrichtung (5) dazu vorgesehen und ausgebildet ist, eine Lücke in der Laubwand der Baum- und/oder Reihenkultur zu erkennen, wobei der Laubhefter (1) eine Steuereinheit (6) umfasst, welche dazu vorgesehen und ausgebildet ist, bei einer Erkennung der Lücke die Verbindungsvorrichtung (4) derart zu betätigen, dass ein Verbindungsvorgang auf Höhe der Lücke ausgeführt wird.

4. Laubhefter (1) nach Anspruch 3,
**dadurch gekennzeichnet, dass**
die Erkennungseinrichtung (5) der Verbindungsvorrichtung (4) in Bewegungsrichtung (L) gesehen vorauseilend angeordnet ist.

5. Laubhefter (1) nach Anspruch 3 oder 4,
**dadurch gekennzeichnet, dass**
die Erkennungseinrichtung (5) dazu vorgesehen und ausgebildet ist, Hindernisse zu erkennen, um einen Verbindungsvorgang auf Höhe der Hindernisse zu verhindern.

6. Laubhefter (1) nach einem der Ansprüche 3 bis 5,
**dadurch gekennzeichnet, dass**
die Baum- und/oder Reihenkultur mindestens ein feststehendes Hindernis umfasst, wobei eine Position des feststehenden Hindernisses bekannt ist, wobei die Erkennungseinrichtung (5) dazu vorgesehen und ausgebildet ist, einen Verbindungsvorgang auf Höhe des feststehenden Hindernisses zu verhindern.

7. Laubhefter (1) nach einem der Ansprüche 3 bis 6,
**dadurch gekennzeichnet, dass**
die Erkennungseinrichtung (5) einen Sensor (7) aufweist, welcher zum Erkennen der Lücke ausgebildet und vorgesehen ist.

8. Laubhefter (1) nach Anspruch 7,
**dadurch gekennzeichnet, dass**
der Sensor (7) ausgewählt ist aus der Gruppe umfassend einen Ultraschallsensor, einen Radarsensor, ein Kamerasystem, einen Reflexlichtschalter, einen ToF-Sensor und jegliche Kombination davon.

9. Laubhefter (1) nach Anspruch 7 oder 8,
**dadurch gekennzeichnet, dass**
die Erkennungseinrichtung (5) ein, vorzugsweise blickdichtes, Element (8) umfasst, wobei der Sensor (7) auf einer ersten Seite der Laubwand angeordnet ist und das Element (8) auf einer zweiten Seite der Laubwand dem Sensor (7) gegenüberliegend angeordnet ist.

10. Verfahren zum Durchführen eines automatischen Verbindungsvorgangs eines Laubhefters (1) zum Bearbeiten von Baum- und/oder Reihenkulturen mit einer Laubwand, insbesondere zum Aufrichten und Binden von Trieben der Baum- und/oder Reihenkultur, wobei der Laubhefter (1) ein Aufrichtsystem (3) zum Aufrichten der Triebe und eine Verbindungsvorrichtung (4) umfasst, wobei das Verfahren die Schritte umfasst:
a. Befahren der Baum- und/oder Reihenkultur und Einbringen und/oder Führen von mindestens zwei Schnurelementen (2) in die Baum- und/oder Reihenkultur auf verschiedenen Seiten der Laubwand mittels des Laubhefters (1), um die Triebe zu positionieren;
b. Erkennen einer Lücke in der Laubwand der Baum- und/oder Reihenkultur mittels einer Erkennungseinrichtung (5) des Laubhefters (1);
c. automatische Betätigung der Verbindungsvorrichtung (4) zum Ausführen eines Verbindungsvorgangs zum Verbinden der Schnurelemente (2) mittels Verbindungselemente bei einer Erkennung der Lücke derart, dass ein Verbindungsvorgang auf Höhe der Lücke ausgeführt wird.
